# EUROPÄISCHE PATENTSCHRIFT

(11) **EP 3 131 270 B1**
(45) Veröffentlichungstag und Bekanntmachung des Hinweises auf die Patenterteilung: **02.10.2019**
(21) Anmeldenummer: 16181481.9
(22) Anmeldetag: 27.07.2016
(51) Int. Cl.: H04L 29/12

(54) **NETZWERKKONFIGURATION UND VERFAHREN ZUR VERGABE VON NETZWERKADRESSEN AN VENTILATOREN IN EINEM NETZWERK**
NETWORK CONFIGURATION AND METHOD FOR ALLOCATING NETWORK ADDRESSES TO VENTILATOR IN A NETWORK
CONFIGURATION DE RESEAU ET PROCEDE DE TRANSMISSION D'ADRESSES RESEAU A DES VENTILATEURS DANS UN RESEAU

(30) Priorität: 14.08.2015 DE 102015113489
(43) Veröffentlichungstag der Anmeldung: 15.02.2017
(73) Patentinhaber: ebm-papst Mulfingen GmbH & Co. KG, 74673 Mulfingen (DE)
(72) Erfinder: HUMM, Markus, 74679 Weißbach (DE)
(74) Vertreter: Staeger & Sperling Partnerschaftsgesellschaft mbB

(56) Entgegenhaltungen:
- EP-A1- 1 659 462
- DE-A1-102010 038 792
- US-A1- 2003 137 396

## Beschreibung

Die vorliegende Erfindung betrifft ein Verfahren zur Vergabe von Netzwerkadressen für Ventilatoren in einem Netzwerk, sowie ein Verfahren zum Konfigurieren eines solchen Netzwerks.

Ferner betrifft die Erfindung einen Ventilator, der ausgebildet ist eine eindeutige von seinem Auslieferungszustand abweichende Netzwerkadresse gemäß dem erfindungsgemäßen Verfahren zur Vergabe von Netzwerkadressen zu erhalten.

Bei der Verwendung von einer Vielzahl von Ventilatoren, zum Beispiel zur Belüftung von Gebäuden oder Reinraumlaboren entsteht der Bedarf, die Ventilatoren zentral von einem Zentralrechner aus zu überwachen und zu steuern. Dazu werden die Ventilatoren als Slave-Einheiten in ein Netzwerk eingebunden und können z. B. über ein Busprotokoll mit dem Zentralrechner kommunizieren.

Um die einzelnen Ventilatoren in dem Netzwerk effizient ansprechen zu können, muss jedem Ventilator jedoch eine eindeutige Adresse in dem Netzwerk zugewiesen werden.

Im Anwendungsbereich von Reinraumanlagen kommen meistens Radialventilatoren zum Einsatz, die in so genannte Filter Fan Units (FFU) integriert sind, um eine vorbestimmte Luftgüteklasse zu erreichen. Hierzu ist vorgesehen, dass ein Luftstrom typischerweise von der Decke in Richtung Boden erzeugt wird, der sämtliche darin enthaltenen unerwünschten Partikel mitnehmen soll, um auf diese Weise ein bestimmtes Reinraumklima zu erzeugen. Ein solches Reinraumklima lässt sich aber üblicherweise nicht mittels einer einzigen FFU realisieren. Es wird vielmehr eine Vielzahl von Ventilatoren an unterschiedlichen Positionen im Gebäude betrieben, um die nötige Luftgüteklasse zu erreichen.

Teilweise werden hierzu hunderte bis tausende Ventilatoren von einem Zentralrechner als Slave-Einheiten gesteuert. Damit diese Kontroll- und Überwachungsaufgabe von der Betriebssoftware ordnungsgemäß durchgeführt werden kann, muss der genauen Standort jedes Ventilators im Gebäude und dessen eindeutige Geräteadresse am Bus bekannt sein.

Es ist bekannt, dass busfähige Slave-Einheiten bei den herkömmlichen Busprotokollen eine eindeutige und voneinander abweichende Slave-Adresse benötigen.

Nachteilig ist die Situation, wenn aus fertigungstechnischen Gründen jedoch stets die identische Geräteadresse vergeben wird, die der Ventilator dann im Auslieferungszustand aufweist.

Für diesen Fall ist es im Stand der Technik bekannt, dass die Ventilatoren manuell der Reihe nach eingeschaltet werden, wobei jedem neu eingeschalteten Ventilator jeweils eine eindeutige von den vorherigen Adressen abweichende Adresse zugewiesen wird, bevor der jeweils nächste Ventilator eingeschaltet werden kann. Dieser Prozess wird solange wiederholt, bis alle im Netzwerk verbundenen Ventilatoren individuell adressierbar sind. Unbefriedigend ist der Umstand, dass hierzu ein hoher manueller Aufwand und ein vorbestimmter Montageablauf notwendig sind, bis alle Ventilatoren über das Netzwerk von einer zentralen Steuerung individuell angesprochen werden können.

Im Stand der Technik wurde daher versucht, das Adressierungsverfahren zu vereinfachen. Aus der Patentschrift EP 485 878 B1 ist z .B. ein Bus-System bekannt, bei dem über T-Schalter parallel verzweigte Slave-Einheiten in einem Master-Slave-Bus angeschlossen sind, die jeweils eine eigene Seriennummer aufweisen, um in einer Initialisierungsphase anhand dieser Seriennummer durch den Master erkannt werden zu können. Dies führt der Master dadurch durch, dass er die gesamte Seriennummer der jeweiligen Slave-Einheiten identifiziert. Ist die Identifizierung jeweils durchgeführt, dann weist der Master dem jeweiligen Slave eine Kommunikationsadresse zu. Nachteilig an dieser Lösung ist, dass die gesamte Seriennummer zur Zuweisung der Kommunikationsadresse ermittelt werden muss, was einen erheblichen Aufwand bei der Initialisierung bedeutet.

In der Offenlegungsschrift DE 10 240 832 A1 wird ein Bus vorgeschlagen, der sich dadurch auszeichnet, dass er im Master-Slave-Betrieb betrieben wird und die Adressierung der angeschlossenen Slaves ebenfalls anhand der Seriennummer, die die einzelnen Slaves aufweisen, durchgeführt wird. Die Adressierung wird insbesondere dadurch ausgeführt, dass nur ein Teilmerkmal der Seriennummer durch den Master an den einzelnen Slaves abgefragt wird. Nur wenn ein einziger Slave auf die Frage des Masters antwortet, dann erhält dieser Slave eine Adresse. Antworten jedoch mehrere oder kein Slave, dann wird die Abfrage des Teilmerkmals verfeinert.

Aus der DE 10 2004 039 447 A1 ist ein weiteres Verfahren zur automatischen Adressvergabe an Teilnehmer eines Systems durch einen Master bekannt, bei dem jeder Teilnehmer einen einstellbaren Adressspeicher aufweist und über einen vorbestimmten Kanal empfangsbereit ist und wobei zu Beginn des Verfahrens jeder Teilnehmer eine Zufallsadresse auswählt. Dabei überprüft der Master für den gesamten gültigen Adressraum, ob zwei Teilnehmer zufällig die gleiche Zufallsadresse ausgewählt haben und veranlasst für diesen Fall, dass die jeweiligen Teilnehmer eine neue Zufallsadresse auswählen, wobei die vorher bereits ermittelten eindeutigen Adressen der Teilnehmer als mögliche neue Zufallsadressen ausscheiden.

Dieses Verfahren hat den Nachteil, dass insbesondere bei großen Netzwerken mit vielen Teilnehmern der Adressraum sehr groß sein kann und dieses Verfahren relativ lange dauert, bis der Master den gesamten Adressraum abgefragt hat und jeder Teilnehmer eine gültige individuelle Adresse besitzt.

DE102010038792 offenbart die Generierung einer positionsabhängigen Adresse und die Übermittlung dieser an ein Steuergerät. Aus der EP 2503763 A1 ist ein Verfahren zur Vergabe von Netzwerkadressen für Ventilatoren in einem Netzwerk bekannt. Jeder Ventilator muss hierzu eine eindeutige und sich unterscheidende Seriennummer (bzw. Gerätenummern) in einem Seriennummernspeicher aufweisen sowie eine Netzwerkadresse in einem einstellbaren Netzwerkadressspeicher. Eine Steuerungseinheit weist den Ventilatoren automatisch Netzwerkadressen zu. Allen Ventilatoren wird zu Beginn eine identische Startadresse als Netzwerkadresse zugewiesen und an die Startadresse werden Seriennummernanfragen mit einer Seriennummernmaske gesendet. Die Seriennummernmaske besteht aus bestimmten und unbestimmten Stellen, und die Ventilatoren antworten auf die Seriennummernmaske abhängig von ihrer Seriennummer. Die Steuerungseinheit weist abhängig von den Antworten den Ventilatoren eindeutige Netzwerkadressen zu und/oder modifiziert die Seriennummernmaske für weitere Seriennummernanfragen.

Nachteilig ist bei diesen Verfahren einerseits der Aufwand des Einlernens der Adressen durch den Zentralrechner, sowie das Problem, dass auch nach eindeutiger Zuordnung einer Kommunikationsadresse zu einem Ventilator mit der entsprechenden Gerätenummer nicht klar ist, wo sich der Ventilator im Netzwerk, d. h. lokal im Gebäude befindet.

Ein Problem ist dabei, dass der Zentralrechner sämtliche am Bus vorhandenen Seriennummern der Ventilatoren einlernen müsste und das bisher dazu benutzte Autoadressierungsverfahren aufgrund der möglicherweise chaotischen Reihenfolge, in welcher die Ventilatoren erkannt werden, nicht geeignet ist. Es besteht das Risiko einer nicht seriell nach der Busverkabelung ablaufenden Erkennung der Seriennummern. Die Problematik tritt bei einer entsprechend hohen Anzahl an Ventilatoren noch verstärkt zu Tage.

Der vorliegenden Erfindung liegt daher die Aufgabe zugrunde, vorbesagte Nachteile zu überwinden und ein Verfahren zur Errichtung und ein Verfahren zur Vergabe von Netzwerkadressen für Ventilatoren bereit zu stellen, das es ermöglicht, die Netzwerkadressen der Ventilatoren bei großen Netzwerken mit vielen Teilnehmern möglichst einfach und individuell vorzunehmen und das es ermöglicht die Position jedes Ventilators zu bestimmen.

Die Erfindung wird durch den Gegenstand der unabhängigen Ansprüche definiert.

Grundgedanke der Erfindung ist dabei, dass jeder Ventilator mit einem externen EEPROM mit einer RFID Schnittstelle ausgeführt wird, wobei der EEPROM Speicher als Parameterspeicher dient. Der EEPROM Speicher (kurz: EEPROM) ist hierzu einerseits mit einer serielle Schnittstelle zur leitergebundenen Kommunikation mit dem Micro-Controller der Slave-Einheit als auch mit der zuvor genannten RFID Schnittstelle zur drahtlosen Kommunikation mit einer geeigneten Kommunikationseinheit ausgestattet.

Erfindungsgemäß ist das Verfahren daher so ausgebildet, dass jeder Slave auch im nicht betriebsbereiten d. h. spannungsfreien Zustand ausgelesen und beschrieben werden kann, indem z. B. eine RFID Kommunikationssoftware auf der zuvor genannten Kommunikationseinheit verwendet wird.

Das erfindungsgemäße Verfahren zur Errichtung des Netzwerkes mittels RFID sieht demzufolge vor, dass die einzelnen FFUs jeweils an ihrem Einbauort montiert werden und im Anschluss jeweils mittels einer vorzugsweise mobilen Kommunikationseinheit aus dem EEPROM des in der FFU eingebauten Ventilators die Seriennummer ausgelesen und gleichzeitig das EEPROM mit geometrischen Lageparametern zur Bestimmung der Einbauposition des Ventilators beschrieben wird.

Die Lageparameter können bevorzugt in Form von Koordinatendaten erfasst werden. So können z. B. X, Y-Koordinaten für die Lage in einer Ebene des Gebäudes und ggf. eine Z-Koordinaten in das EEPROM geschrieben werden, wobei die Z-Koordinate die unterschiedlichen Stockwerke in dem Gebäude mit dem Bus-Netzwerk charakterisiert. Bei Bedarf können noch weitere den Standort charakterisierende Daten eingelesen werden, wie z. B. mit einer 4. Koordinate das betreffende Gebäude von mehreren Gebäuden, in denen das gemeinsames Netzwerk errichtet wird.

Ein erster Aspekt der vorliegenden Erfindung betrifft daher ein Netzwerk bestehend aus wenigstens einem Zentralrechner und eine Vielzahl an FFUs bzw. Ventilatoren, welche vorzugsweise über ein gemeinsames Bus-System drahtgebunden und/oder drahtlos mit dem Zentralrechner kommunizieren können bzw. verbunden sind. Die Ventilatoren stellen somit Slave-Einheiten im Netzwerk dar. wobei jeder Ventilator über einen wiederbeschreibbaren Speicher und eine RFID-Schnittstelle zur Kommunikation mit einem vorzugsweise mobilen Kommunikationsgerät verfügt und wobei im Speicher des jeweiligen Ventilators dessen Seriennummer S abgespeichert ist und die Seriennummer S im nicht betriebsbereiten d. h. spannungsfreien Zustand des jeweiligen Ventilators von dem Kommunikationsgerät ausgelesen werden kann.

In einer vorteilhaften Ausgestaltung der Erfindung ist vorgesehen, dass ferner im Speicher des jeweiligen Ventilators korrespondierende Positionsdaten (z. B. Koordinatendaten X, Y, Z) zur örtlichen Installationsposition des betreffenden Ventilators abgespeichert sind.

Besonders Vorteilhaft ist es, wenn als interner oder externer Speicher einer jeden FFU bzw. eines jeden Ventilators ein EEPROM mit RFID-Schnittstelle vorgesehen ist. Der Parameterspeicher der Slave-Einheiten wird bevorzugt als externes EEPROM ausgeführt. Dieses bietet sowohl eine serielle Schnittstelle zum Micro-Controller der Slave-Einheit als auch eine drahtlose RFID-Schnittstelle zur direkten Kommunikation mit einer geeigneten Kommunikationseinheit, wie zum Beispiel einem handelsüblichen Smartphone.

Zusätzlich zur vorhandenen und von dem Zentralrechner genutzten RS485 Schnittstelle kann der Slave bzw. der betroffene Ventilator also auch im spannungsfreien Zustand direkt mittels RFID-Kommunikationsprotokollen ausgelesen und auch beschrieben werden.

Es ist weiter bevorzugt die Kommunikationseinrichtung als eine mobile Kommunikationseinrichtung vorzusehen, auf der eine Software zum Auslesen und Beschreiben von Daten in den jeweiligen Speicher des Ventilators über die jeweilige RFID-Schnittstelle des Ventilators konfiguriert ist.

In einer vorteilhaften Ausführung der Erfindung ist vorgesehen, dass ferner eine Positionserfassungsvorrichtung integral im oder in unmittelbarer Nachbarschaft zum Kommunikationsgerät vorgesehen ist, welche Mittel aufweist, um die Position des Kommunikationsgerätes jeweils zu einem Zeitpunkt erfassen zu können, sobald die Seriennummer eines dem Kommunikationsgerätes am nächsten gelegenen Ventilators ausgelesen wird, um die erfasste Position in Form von Positionsdaten an den Speicher mittelbar oder unmittelbar zu übergeben. Hierfür kann die Positionserfassungsvorrichtung z. B. ein GPS-Empfangsmodul aufweisen oder einen Transceiver zur Kommunikation mit Beacons, vorzugsweise mit Bluetooth Beacons.

Weiter bevorzugt sind daher eine Vielzahl von Beacons, vorzugsweise Bluetooth-Beacons jeweils in der Umgebung zu den Installationspositionen der Ventilatoren innerhalb des Gebäudes verteilt angeordnet und ist die Software des Kommunikationsgerätes so konfiguriert, dass es einen jeden Beacon in dessen Sendereichweite identifizieren und dessen Signalstärke oder Signallaufzeit erfassen kann. Sind z. B. in einem Raum mehrere Beacons in Reichweite platziert, kann durch Messung von Signallaufzeiten die Entfernung zum jeweiligen Beacon ermittelt werden. Ist die Position der Beacons innerhalb des Raumes bekannt, kann dann durch Ermitteln der relativen Position zu der von mehreren solcher Beacons die eigene Position hinreichend genau ermittelt werden. Da GPS bzw. die anderen Ortungssysteme innerhalb eines Gebäudes teilweise nicht hinreichend zuverlässig oder hinreichend genau funktionieren, wäre in einem solchen Fall die Verwendung von Beacons die bevorzugte Option. Die Positionsdaten würden dabei in dem Moment ermittelt, in dem die Kommunikation mit dem RFID-EEPROM des Ventilators stattfindet.

Ein weiterer Aspekt der vorliegenden Erfindung betrifft die Konfiguration der Netzwerkadressen zur Identifikation der Slave-Einheiten d. h. der Ventilatoren im Netzwerk. Erfindungsgemäß ist daher ein Verfahren zur Konfiguration eines vorzugsweise wie zuvor beschriebenen Netzwerks vorgesehen, wobei nach der Installation eines Ventilators mittels des mobilen Kommunikationsgerätes über die RFID-Schnittstelle die Seriennummer des betroffenen Ventilators aus dessen Speicher ausgelesen wird.

Weiter vorteilhaft ist es, wenn nach dem Auslesen der Seriennummer des betroffenen Ventilators dem Ventilator mittels des mobilen Kommunikationsgerätes eine eindeutige Netzwerkadresse zugewiesen wird.

In einer weiter bevorzugten Ausgestaltung des erfindungsgemäßen Verfahrens ist vorgesehen, dass eine Positionserfassungsvorrichtung integral im oder in unmittelbarer Nachbarschaft zum besagten Kommunikationsgerät vorgesehen ist und das Verfahren so durchgeführt wird, dass die Position des Kommunikationsgerätes jeweils zu dem Zeitpunkt erfasst wird, sobald die Seriennummer des dem Kommunikationsgerätes jeweils am nächsten gelegenen Ventilators ausgelesen wird und wobei das Kommunikationsgerät die dabei von der Positionserfassungsvorrichtung erfasste Position in Form von Positionsdaten an einen Speicher mittelbar oder unmittelbar übergibt bzw. den Speicher mittelbar oder unmittelbar beschreibt.

Somit kann die Installation der Ventilatoren prinzipiell nach einer beliebigen Reihenfolge erfolgen. Nach der Installation eines Ventilators an seinem Einbauort, kann der Monteur das mobile Kommunikationsgerät in die unmittelbare Nähe des Ventilators halten und die Kommunikationssoftware starten, um Daten über die RFID-Schnittstelle auszulesen und Positionsdaten an den Speicher zu übergeben. Somit kann ohne jegliche Einbeziehung des Zentralspeichers, bereits im spannungslosen Zustand der Anlage, der Datenspeicher mit Positionsdaten konfiguriert werden, um darüber eine einfache und schnelle Adressierung im Netzwerk vornehmen zu können. Vorteilhaft ist dabei eine Adressierung sobald das Netzwerk aktiv geschalten wird.

Nach dem alle Ventilatoren eingebaut und mit Spannung versorgt wurden, kann die zentrale Steuereinheit die Seriennummern aller Ventilatoren mit einem Autoadressierungsverfahren mittels RS485 Kommunikation einlernen. Nach dem Einlernen aller Seriennummern kann mit jedem der Ventilatoren unmittelbar über die Bus-Leitung kommuniziert werden. Am Zentralrechner können nun die Positionskoordinaten jedes Ventilators ausgelesen und damit die Ventilatoren in der Darstellung auf einem Display visualisiert werden, die besonders bevorzugt alle Ventilatoren entsprechend ihrer Positionsdaten auf einen maßstäblichen Gebäudeplan darstellt.

Es kann erfindungsgemäß in einer alternativen Ausführungsform auch vorgesehen sein, dass mittels einer Schnittstelle am Kommunikationsgerät die Positionsdaten für jeden Ventilator eingelesen (z. B. über einen Barcode) oder manuell eingegeben und nach dem Auslesen der Seriennummer des betroffenen Ventilators dem Ventilator mittels des mobilen Kommunikationsgerätes die eingelesenen oder eingegebenen Positionsdaten zugewiesen werden. Hierzu sollte sich zum Datentransfer das Kommunikationsgerät im Sende bzw. Empfangsbereich des zugehörigen Ventilators befinden (bevorzugt unmittelbar daneben).

Die Erfindung betrifft die Vergabe von Netzwerkadressen für Ventilatoren. Hierzu ist erfindungsgemäß vorgesehen, dass eine Steuerungseinheit, vorzugsweise die Steuerungseinheit des Zentralrechners den Ventilatoren automatisch Netzwerkadressen (ID) zuweist, indem die Ventilatoren abhängig von Anfragen des Zentralrechners z. B. über einen Broadcast Befehl mit ihren eindeutigen Positionsdaten antworten und die Steuerungseinheit abhängig von den Antworten den Ventilatoren eine eindeutige Netzwerkadressen (ID) zuweist und diese mit den Positionsdaten des jeweiligen Ventilators verknüpft.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:

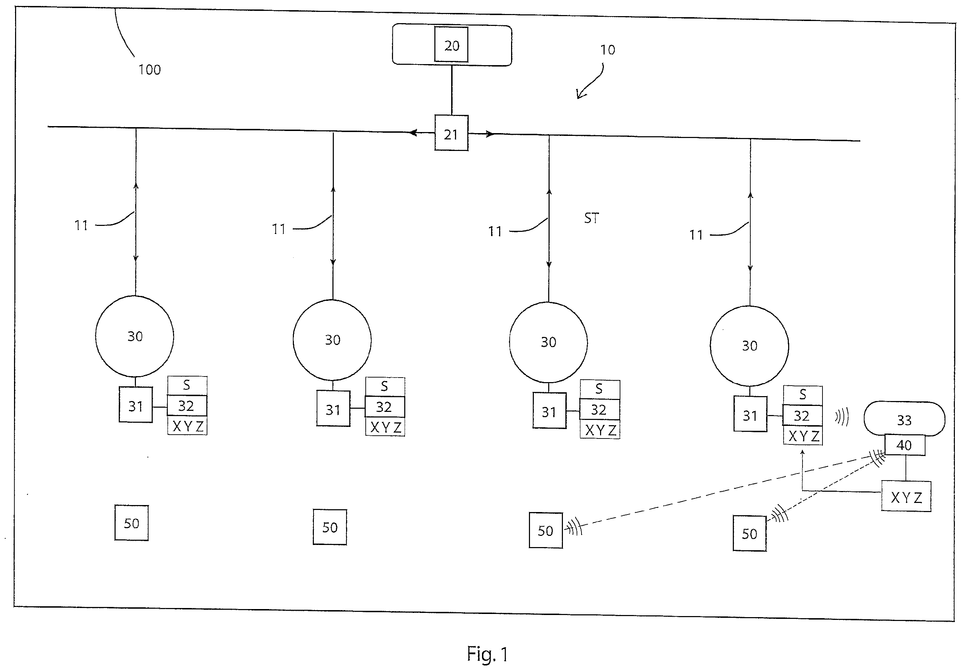

- Fig.1: eine schematische Darstellung einer Ausführungsform eines erfindungsgemäßen Netzwerks während der Konfiguration.

Im Folgenden wird die Erfindung anhand einer beispielhaften Ausführungsform mit Bezug auf die Figur 1 näher beschrieben, wobei gleiche Bezugszeichen auf gleiche funktionale und/oder strukturelle Merkmale hinweisen.

Die Figur 1 zeigt eine schematische Darstellung einer Ausführungsform eines erfindungsgemäßen Netzwerks 10 in einem Gebäude 100.

Das Netzwerk 10 bestehend in dieser Ausführungsform aus einem Zentralrechner 20 mit einer Zentralsteuerung 21 sowie einer Vielzahl an Ventilatoren 30 (wovon lediglich vier dargestellt sind), die an verteilten Positionen im Gebäude 100 installiert wurden. Die Ventilatoren 30 verfügen über je eine individuelle voneinander verschiedene Seriennummer S (bzw. Gerätenummer) und eine Standardnetzwerkadresse, die werkseitig für alle Ventilatoren 30 die gleiche Netzwerkadresse darstellt.

Die Ventilatoren 30 sind über ein Bus-System 11 über Busleitungen mit dem Zentralrechner 20 zur Kommunikation verbunden.

Die im Netzwerk 10 installierten Ventilatoren 30 weisen einen wiederbeschreibbaren EEPROM-Speicher 31 mit einer RFID-Schnittstelle 32 zur Kommunikation mit dem dargestellten mobilen Kommunikationsgerät 33 auf, welches z. B. ein Monteur mit sich führt.

Die Seriennummern S der vier dargestellten Ventilatoren 30 wurden bereits im nicht betriebsbereiten spannungsfreien Zustand des jeweiligen Ventilators 30 von dem Kommunikationsgerät 33 ausgelesen und gleichzeitig wurde die mit der Positionserfassungsvorrichtung 40 jeweils erfassten Positionsdaten X, Y, Z vom Kommunikationsgerät 33 über die RFID-Schnittstelle 32 an den EEPROM-Speicher 31 übergeben.

Die jeweils im EEPROM-Speicher 31 abgespeicherten Positionsdaten X, Y, Z können später von der Steuereinheit 21 des Zentralrechners 20 zur Identifikationserkennung abgefragt werden und über die Busleitung 11 können dann die einzelnen Netzwerkadressen ID an die jeweiligen Ventilatoren 30 mit einem Autoadressierverfahren übergeben werden.

In dem vorliegenden Ausführungsbeispiel ist das Kommunikationsgerät 33 ein Smartphone mit einer Softwareapplikation und einem GPS-Modul, sowie einem Bluetooth-Transceiver zum Empfangen von Sendesignalen von Bluetooth-Beacons 50, die im Gebäude 100 jeweils in der Umgebung zu den Installationspositionen der Ventilatoren 30 verteilt, angeordnet sind.

Die Softwareapplikation auf dem Smartphone 33 ist derart konfiguriert, dass es möglich ist diejenigen Beacons 50 in der Sendereichweite des Kommunikationsgerätes mit dem integrierten Bluetooth-Transceiver zu identifizieren und dessen Signalstärke oder Signallaufzeit zu erfassen. Daraus lassen sich mit herkömmlichen Methoden (z. B. durch Trilateration) die geometrischen Positionsdaten des Kommunikationsgerätes 33 bestimmen. Hierzu sollte sich das Kommunikationsgerät 33, wie in der Figur 1 schematisch angedeutet, in unmittelbarer Nachbarschaft zu jedem Ventilator 30 befinden, dessen Installationsposition bestimmt werden soll, so dass die Position des Kommunikationsgerätes 33 mit ausreichender Genauigkeit mit der Position des Ventilators 30 korrespondiert.

Alternativ könnte man mit einem GPS-Empfangsmodul bei ausreichender Signalstärke, ebenso die Positionsdaten X, Y, Z ermitteln und über die RFID-Schnittstelle 32 an den EEPROM-Speicher 31 übergeben und dort abspeichern. Die Erfindung beschränkt sich in ihrer Ausführung nicht auf die vorstehend angegebenen bevorzugten Ausführungsbeispiele.

## Patentansprüche

1. System bestehend aus einem mobilen Kommunikationsgerät (33) und einem Netzwerk (10) mit einem Zentralrechner (20) und einer Vielzahl an Ventilatoren (30), wobei die Ventilatoren über ein Bus-System (11) mit dem Zentralrechner (20) kommunizieren können, wobei jeder Ventilator (30) über einen wiederbeschreibbaren Speicher (31) und eine RFID-Schnittstelle (32) zur Kommunikation mit dem mobilen Kommunikationsgerät (33) verfügt, wobei im Speicher (31) des jeweiligen Ventilators (30) dessen Seriennummer (S) abgespeichert ist und die Seriennummer (S) im spannungsfreien Nichtbetriebszustand des jeweiligen Ventilators (30) von dem Kommunikationsgerät (33) ausgelesen werden kann und der Zentralrechner (20) ausgebildet ist, abhängig von der ausgelesenen Seriennummer (S) den spannungsfreien Ventilatoren (30) automatisch Netzwerkadressen zuweisen zu können, wobei ferner eine Positionserfassungsvorrichtung (40) integral im oder in unmittelbarer Nachbarschaft zum Kommunikationsgerät (33) angeordnet ist, welche Mittel aufweist, die Position des Kommunikationsgerätes (33) jeweils zu einem Zeitpunkt zu erfassen, sobald die Seriennummer (S) des dem Kommunikationsgerätes (33) am nächsten gelegenen Ventilators (30) ausgelesen wird, und das Kommunikationsgerät (33) die erfasste Position in Form von Positionsdaten (X,Y,Z) an den Speicher (31) mittelbar oder unmittelbar übergibt, wobei auf der Kommunikationseinrichtung (33) eine Software zum Auslesen und Beschreiben von Positionsdaten in den jeweiligen Speicher (31) des Ventilators (30) über die betreffende RFID-Schnittstelle (32) des Ventilators (30) vorgesehen ist und eine Steuerungseinheit (21) des Zentralrechners (20) den Ventilatoren (30) automatisch Netzwerkadressen zuweist, indem die Ventilatoren (30) abhängig von Anfragen des Zentralrechners mit ihren eindeutigen Positionsdaten (X,Y,Z) antworten und davon abhängig die Netzwerkadressen zugewiesen und mit den Positionsdaten (X, Y, Z) des jeweiligen Ventilators (30) verknüpft werden.

2. System gemäß Anspruch 1, **dadurch gekennzeichnet, dass** ferner im Speicher (31) des jeweiligen Ventilators (30) korrespondierende Positionsdaten (X, Y, Z) zur örtlichen Installationsposition des betreffenden Ventilators (30) abgespeichert sind.

3. System gemäß Anspruch 1 oder 2, **dadurch gekennzeichnet, dass** der Speicher (31) ein EEPROM mit der RFID-Schnittstelle (32) ist.

4. System gemäß einem der vorhergehenden Ansprüche 1-3, **dadurch gekennzeichnet, dass** die Positionserfassungsvorrichtung (40) ein GPS-Empfangsmodul aufweist.

5. System gemäß einem der Ansprüche 1 bis 4, **dadurch gekennzeichnet, dass** ferner eine Vielzahl von Beacons (50) verteilt jeweils in der Umgebung zu den Installationspositionen der Ventilatoren (30) vorgesehen sind und dass die Software des Kommunikationsgerätes (33) konfiguriert ist einen jeden Beacon (50) in dessen Sendereichweite zu identifizieren und dessen Signalstärke oder Signallaufzeit zu erfassen.

6. Verfahren zur Konfiguration von spannungsfreien Ventilatoren (30) in einem System, das ausgebildet ist gemäß den Merkmalen eines der Ansprüche 1 bis 5, wobei nach der Installation eines jeweiligen Ventilators (30) mittels des mobilen Kommunikationsgerätes (33) die Seriennummer (S) des betroffenen Ventilators (30) aus dessen Speicher (31) ausgelesen wird und mit der Positionserfassungsvorrichtung (40) die Position des Kommunikationsgerätes (33) jeweils zu diesem Zeitpunkt erfasst wird, sobald die Seriennummer (S) des dem Kommunikationsgerätes (33) am nächsten gelegenen Ventilators (30) ausgelesen wird und diesem Ventilator (30) die erfasste Position in Form von Positionsdaten (X,Y,Z) an den Speicher (31) mittels der Software auf der Kommunikationseinrichtung (33) über die betreffende RFID-Schnittstelle (32) mittelbar oder unmittelbar übergeben wird und eine Steuerungseinheit (21) des Zentralrechners (20) den Ventilatoren (30) automatisch Netzwerkadressen zuweist, indem die Ventilatoren (30) abhängig von Anfragen des Zentralrechners mit ihren eindeutigen Positionsdaten (X,Y,Z) antworten und davon abhängig die Netzwerkadressen zugewiesen und mit den Positionsdaten (X, Y, Z) des jeweiligen Ventilators (30) verknüpft werden.

## Claims

1. System comprising a mobile communication device (33) and a network (10) having a central computer (20) and a plurality of fans (30), wherein the fans are able to communicate with the central computer (20) via a bus system (11), wherein each fan (30) is provided with a rewritable memory (31) and a RFID interface (32) for communication with the mobile communication device (33), wherein in the memory (31) of the respective fan (30) its serial number (S) is stored and the serial number (S) is out-readable by the communication device (33) in the voltage-free non-operational state of the respective fan (30), and the central computer (20) is configured to be able to automatically assign network addresses to the voltage-free fans (30) depending on the read out serial number (S), wherein furthermore a position detection device (40) is arranged integrally in or in the immediate vicinity of the communication device (33), which has means for detecting the position of the communication device (33) respectively at a time as soon as the serial number (S) of the fan (30) located closest to the communication device (33) is read out, and the communication device (33) transfers the detected position directly or indirectly to the memory (31) in the form of position data (X, Y, Z), wherein software for reading out and writing position data into the respective memory (31) of the fan (30) via the respective RFID interface (32) of the fan (30) is provided on the communication device (33), and a control unit (21) of the central computer (20) automatically assigns network addresses to the fans (30), as the fans (30) respond with their unique position data (X, Y, Z) depending on requests from the central computer and, depending thereon, the network addresses being assigned and linked to the position data (X, Y, Z) of the respective fan (30).

2. System according to claim 1, **characterized in that** furthermore position data (X, Y, Z) corresponding to the local installation position of the respective fan (30) are stored in the memory (31) of the respective fan (30).

3. System according to claim 1 or 2, **characterized in that** the memory (31) is an EEPROM with the RFID interface (32).

4. System according to one of the preceding claims 1-3, **characterized in that** the position detecting device (40) has a GPS reception module.

5. System according to one of the claims 1 to 4, **characterized in that** furthermore a plurality of beacons (50) distributed respectively in the periphery to the installation positions of the fans (30) is provided and that the software of the communication device (33) is configured to identify each beacon (50) in its transmission range and to detect its signal strength or signal propagation time.

6. Method for configuring voltage-free fans (30) in a system configured according to the features of one of the claims 1 to 5, wherein the serial number (S) of the concerned fan (30) is read out of its memory (31) by means of the mobile communication device (33) after the installation of a respective fan (30), and the position of the communication device (33) is respectively detected at this time by means of the position detection device (40), as soon as the serial number (S) of the fan (30) closest to the communication device (33) is read out and the detected position is directly or indirectly transmitted to this fan (30) in the form of position data (X, Y, Z) to the memory (31) by means of the software on the communication device (33) via the respective RFID interface (32), and a control unit (21) of the central computer (20) automatically assigns network addresses to the fans (30) as the fans (30) respond with their unique position data (X, Y, Z) depending on requests from the central computer, and depending thereon the network addresses are assigned and linked with the position data (X, Y, Z) of the respective fan (30).

## Revendications

1. Système comprenant un dispositif de communication mobile (20) et un réseau (10) comportant un ordinateur central (20) et une pluralité de ventilateurs (30), via lequel les ventilateurs peuvent communiquer avec l'ordinateur central (20) via un système de bus (11) comportant une mémoire réinscriptible (31) et une interface RFID (32) pour la communication avec le dispositif de communication mobile (33) dans la mémoire (31) du ventilateur respectif (30) son numéro de série (S) est illisible par le dispositif de communication (33) dans l'état non opérationnel sans tension du ventilateur respectif (30), et l'ordinateur central (20) est adapté pour attribuer automatiquement des adresses de réseau (ID) aux ventilateurs (30) en fonction du numéro de série (S) reçu du dispositif de communication, comprenant en outre un dispositif de détection de position (40) qui est agencé intégré ou adjacent au dispositif de communication (33), lequel a des moyens qui détectent la position du dispositif de communication (33) chaque fois à un moment où le numéro de série (S) du dispositif de communication (33) le plus proche du ventilateur (30) est lu, et le dispositif de communication (33) passe directement ou indirectement la position détectée sous la forme de données de position (X, Y, Z) dans la mémoire (31), le moyen de communication (33) comprenant un logiciel pour lire et écrire des données de position dans la mémoire respective (31) du ventilateur (30) via l'interface RFID correspondante (32) du ventilateur (30) et une unité de contrôle (21) du l'ordinateur central (20) attribue automatiquement les adresses réseau aux ventilateurs (30) en répondant aux ventilateurs (30) en fonction de leurs données de position uniques (X, Y, Z) et en affectant les adresses de réseau et en communiquant sont liés avec les données de position (X , Y, Z) du ventilateur respectif (30).

2. Système selon la revendication 1 ou, **caractérisé en ce que** dans la mémoire (31) du ventilateur respectif (30), des données de position correspondantes (X, Y, Z) à la position d'installation locale du ventilateur respectif (30) sont mémorisées.

3. Système selon la revendication 1 ou 2, **caractérisé en ce que** la mémoire (31) est une EEPROM avec l'interface RFID (32).

4. Système selon l'une des revendications précédentes, **caractérisé en ce que** le dispositif de détection de position (40) comprend un module récepteur GPS.

5. Système selon l'une quelconque des revendications 1 à 4, **caractérisé en ce qu'**il comprend en outre une pluralité de balises (50) réparties respectivement au voisinage des positions d'installation des ventilateurs (30) et **en ce que** le logiciel du dispositif de communication (33) est configuré por identifier chaque balise (50) dans sa plage d'émission et capturer son intensité ou son temps de propagation du signal.

6. Procédé de configuration de ventilateurs (30) dans un réseau (1) selon l'une des revendications 1 à 5, dans lequel, après l'installation d'un ventilateur respectif (30) dans le réseau au moyen du dispositif de communication mobile (33), le numéro de série (S) de le ventilateur concerné (30) est lu dans la mémoire (31) et le plus proche du dispositif de communication (33), dès que le numéro de série (S) du dispositif (33) est détecté sur le moment au moyen du dispositif de détection de position (40) sous forme de données de position (X, Y, Z) dans la mémoire (31) au moyen du logiciel sur le dispositif de communication (33) via l'interface RFID respective (32), et une unité de commande (21) de l'ordinateur central (20) attribue automatiquement des adresses réseau aux ventilateurs (30) lorsque les ventilateurs (30) répondent avec leurs données de position uniques (X, Y, Z) en fonction des demandes de l'ordinateur central et, en fonction de celles-ci, les adresses réseau sont attribuées et liées aux données de position (X, Y, Z) du ventilateur respectif (30).
